**Europäisches Patentamt**

**European Patent Office**

**Office européen des brevets**

(19)

(11) Veröffentlichungsnummer: **0 008 587**
**A1**

(12) # EUROPÄISCHE PATENTANMELDUNG

(21) Anmeldenummer: **78100715.8**

(22) Anmeldetag: **22.08.78**

(51) Int. Cl.³: **B 01 D 59/20**
**B 01 D 53/24**

(43) Veröffentlichungstag der Anmeldung:
**19.03.80** Patentblatt **80/6**

(84) Benannte Vertragsstaaten:
**BE CH DE FR NL SE**

(71) Anmelder: **HAGA ZENTRIFUGEN GMBH**
**Reichenhallerstrasse 52**
**D-8228 Freilassing(DE)**

(72) Erfinder: **Gazda, Hans Otto Ernst**
**Anton Kriegergasse 155**
**A-1238 Wien(AT)**

(74) Vertreter: **Frobenius, Karl**
**Ludwigstrasse 12**
**D-8230 Bad Reichenhall(DE)**

(54) **Verfahren und Vorrichtung zum Trennen bzw. Anreichern von gasförmigen Gemischen.** —

(57) Vorrichtung zum Trennen bzw. Anreichern von gasförmigen Gemischen, insbesondere Isotopengemischen, in Fraktionen verschieden grossen Gewichtes, vorzugsweise zur Anreicherung von U 235 als Uranhexafluorid mit einer mit hoher Geschwindigkeit umlaufenden Scheibe, welche einen in radialer Richtung verlaufenden, ringförmigen Zuführbereich für das Gemisch aufweist, welcher durch mindestens einen, in radialer Richtung verlaufenden Düsenspalt einer ringförmigen Düse unterteilt ist und der Zuführbereich anschliessend an den Düsenspalt annähernd in der Ebene des Spalts einen ringförmigen, in radialer Richtung verlaufenden Abführkanal für die schwere Fraktion des Gemisches und zu beiden Seiten des Düsenspaltes in radialer Richtung verlaufende ringförmige Abführkanäle für die leichte Fraktion des Gemisches aufweist, wobei erfindungsgemäss vorgesehen ist, dass mehrere Scheiben (5, 6, 7, 8) parallel zueinander auf einer gemeinsamen Welle (1) angeordnet sind und die Ableitkanäle (13, 14) für die leicht und/oder schwere Fraktion des Gemisches mehrerer Scheiben miteinander verbunden sind.

./....

EP 0 008 587 A1

Fig. 1

-1-

## Verfahren und Vorrichtung zum Trennen bzw. Anreichern von gasförmigen Gemischen.

Zum Trennen bezw. Anreichern von gasförmigen Gemischen, insbesondere von Isotopengemischen, sind verschiedene Verfahren bekannt.

Zur Anreicherung des U 235 Gehaltes wird in der Praxis in erster Linie das Diffusionsverfahren verwendet. Weiters sind noch das sogenannte Gaszentrifugen- und das Trenndüsenverfahren bekannt geworden. Bei allen drei Verfahren müssen wegen des geringen Trenneffektes bzw. des kleinen Durchsatzes eine grössere Anzahl von Trennstufen hintereinander geschaltet werden, um die nötige Anreicherung zu erhalten. Weiters sind bei diesen bekannten Verfahren der grosse Energieverbrauch und die grossen Investitionskosten nachteilig.

Aus der OE-PS 238 697 ist eine Vorrichtung zum TRennen bzw. Anreichern von gasförmigen Gemischen bekannt. Diese bekannte Vorrichtung weist eine mit hoher Geschwindigkeit umlaufende Scheibe auf, welche einen in radialer Richtung verlaufenden ringförmigen Zuführbereich für das Gemisch aufweist, welcher durch mindestens einen, in radialer Richtung verlaufenden Düsenspalt einer ringförmigen Düse unterteilt ist und der Zuführbereich anschliessend an den Düsenspalt annähernd in der Ebene des Düsenspaltes eine Abführleitung für die schwere Fraktion des Gemisches und zu beiden Seiten des Düsenspaltes Abführleitungen für die leichte Fraktion des Gemisches aufweist. Diese bekannte Vorrichtung hat sich jedoch zur Isotopentrennung insbesondere zur Uran-Isotopentrennung in der Praxis nicht bewährt.

Aufgabe der Erfindung ist es, ein Verfahren zu schaffen, welches die Nachteile der bekannten Verfahren beseitigt und sich insbesondere zur Uran-Isotopenanreicherung bzw. Trennung eignet.

Dies wird ausgehend von einem Verfahren zum Trennen bzw. Anreichern von gasförmigen Gemischen, insbesondere Isotopengemischen, in Fraktionen verschieden grossen spezifischen Gewichtes, vorzugsweise zur Anreicherung von U 238 und U 235 unter Verwendung von Uranhexafluorid, wobei das gasförmige Gemisch durch eine Zentrifuge in radialer Richtung beschleunigt und im Austrittsbereich am Rand der Zentrifuge in die beiden Fraktionen getrennt wird, erfindungsgemäss dadurch erreicht, dass im Austrittbereich am äusseren Rand der Zentrifuge das Gasgemisch in eine turbulente Strömung innerhalb einer Grenzschicht versetzt wird und die schwere Fraktion der Gasmischung infolge des Zusammenspiels der durch die Rotation der Zentrifuge hervorgerufenen Zentrifugalkräfte mit den durch die Wirbelbildung auf die Turbulenzballen wirkenden Zentrifugalkräfte aus der Grenzschicht herausdiffundiert und aus der mit der leichten Fraktion angereicherten Grenzschicht die leichte Fraktion des Gasgemisches abgeleitet wird.

Die Erfindung betrifft auch eine Vorrichtung zur Durchführung des Verfahrens, welche dadurch gekennzeichnet ist, daß die Zentrifuge mindestens eine mit hoher Geschwindigkeit umlaufende Scheibe besitzt, welche einen in radialer Richtung verlaufenden Zuführbereich für das gasförmige Gemisch aufweist, wobei in unmittelbarer Nähe des Aussenumfanges der Scheibe mindestens eine Ableitvorrichtung für die leichte Fraktion des Gemisches vorgesehen ist.

-3-

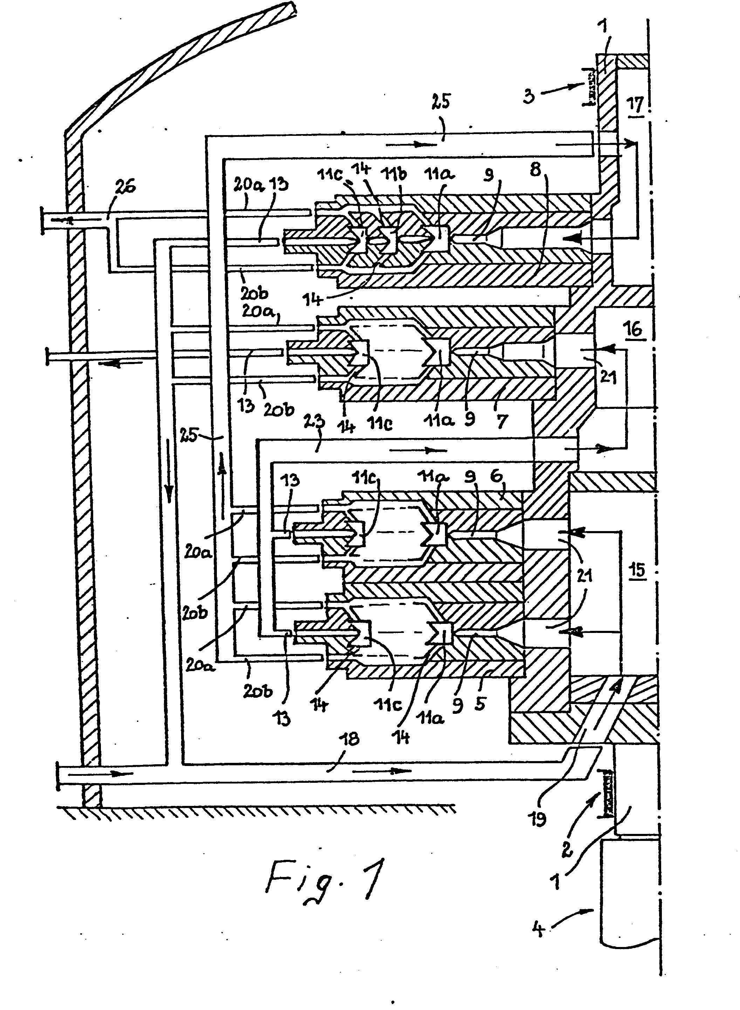

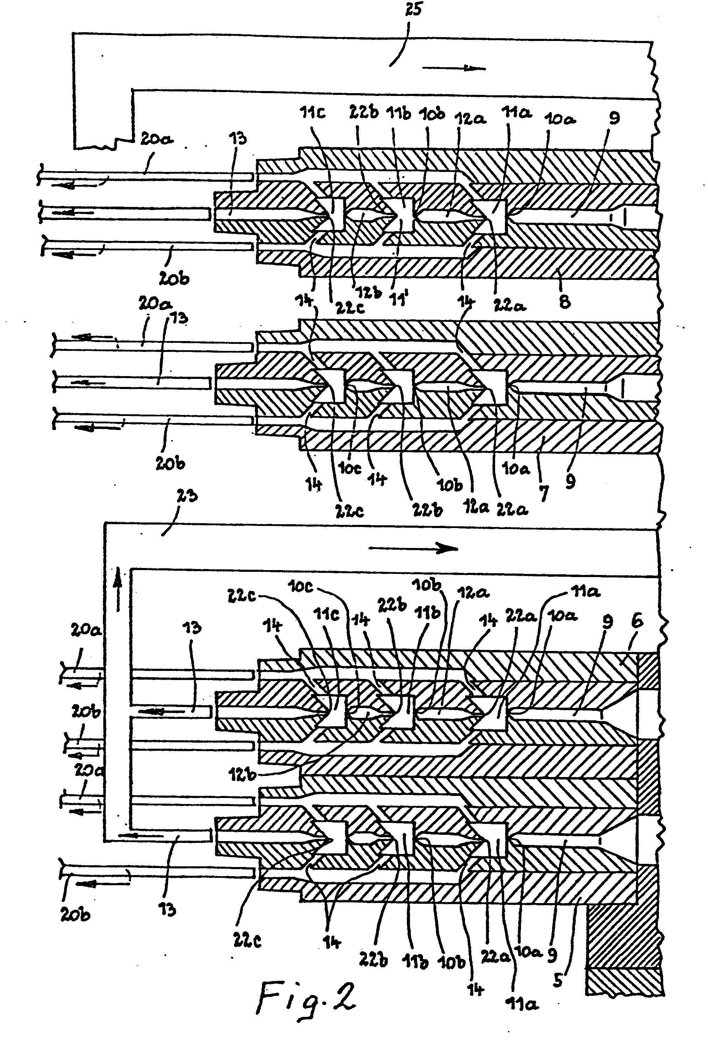

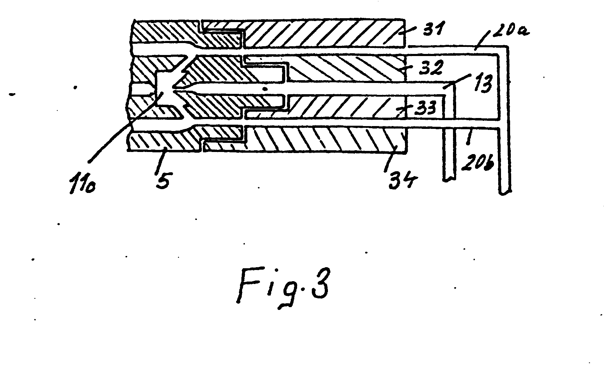

Die Erfindung wird nun näher unter Bezugnahme auf die Zeichnungen gezeigt. In den Zeichnungen zeigen Fig. 1 eine schematische Darstellung einer erfindungsgemässen Vorrichtung; Fig. 2 eine erfindungsgemässe Zentrifugenscheibe mit radial verlaufenden Kanälen, einer Abnahmevorrichtung für das Gemisch; Fig. 3 eine Detailansicht des Umfangbereiches der Scheibe bei einer abgeänderten Ausführungsform und Fig 4 eine Draufsicht von Fig. 3.

Die Vorrichtung besteht aus einer Scheibe 1, welche in Richtung des Pfeiles A mit hoher Umdrehungszahl gedreht wird. Innerhalb der Scheibe 1 befinden sich in radialer Richtung verlaufende Kanäle 2, welche in mehreren Ebenen verlaufen können und im Mittelbereich mit einem Zuführkanal 3 für das zu trennende Gemisch verbunden sind. Die Kanäle 2 können etwa in Form von Leitungen 2´ (Fig 2) ausgeführt sein. Das über den Zuführkanal 3 zugeführte Gasgemisch wird in der Scheibe 1 komprimiert und in radialer Richtung beschleunigt. Beim Austritt des Gases aus der Scheibe 1 kommt es im unmittelbaren Randbereich der Scheibe 1 in einer Grenzschicht auf Grund der plötzlichen Entspannung des austretenden komprimierten Gases und auf Grund der Rotation der Scheibe 1 zur Ausbildung von Wirbeln 10. Da diese Wirbel 10 mit hoher Geschwindigkeit rotieren, diffundiert die schwere Fraktion nach aussen, so dass ein gezieltes Absaugen der leichten Fraktion im unmittelbaren Bereich der Grenzschicht durch Abführleitungen 4 möglich ist.

In Fig. 3 besteht die Scheibe 1 aus zwie Platten 5, 6, zwischen denen ein ringförmiger Zuführbereich 8 für das Gasgemisch vorgesehen ist. Am Rande der Scheibe 1 ist eine Erweiterung 7 vorgesehen. Beim Austritt des Gemisches aus dem Zuführbereich 8 kommt es in der Erweiterung 7 zur Ausbildung von Wirbeln 10. Da diese Wirbel 10 mit hoher Ge-

-4-

schwindigkeit rotieren, wird die schwere Fraktion nach aussen gedrängt, so dass ein gezieltes Absaugen des Gemisches in der Grenzschicht durch die Leitung 9 erfolgen kann. Durch Vorsehen der Erweiterung 7 wird die Wirbelbildung im wesentlichen auf den Bereich der Erweiterung begrenzt.

Die erfindungsgemässe Vorrichtung wird vorzugsweise unter Vakuum betrieben. Weiters können bei der erfindungsgemässen Vorrichtung mehrere Scheiben 1 auf einer Welle angeordnet werden, so dass eine Anreicherungskaskade erhalten wird.

-1-

Patentansprüche

1. Verfahren zum Trennen bzw. Anreichern von gasförmigen Gemischen, insbesondere Isotopengemischen, in Fraktionen verschieden grossen spezifischen Gewichtes, vorzugsweise zur Anreicherung von U 238 und 235 unter Verwendung von Uranhexafluorid, wobei das gasförmige Gemisch durch eine Zentrifuge in radialer Richtung beschleunigt und im Austrittbereich am Rand der Zentrifuge in die beiden Fraktionen getrennt wird, dadurch gekennzeichnet, dass im Austrittbereich am äusseren Rand der Zentrifuge das Gasgemisch in eine turbulente Strömung innerhalb einer Grenzschicht versetzt wird und die schwere Fraktion der Gasmischung infolge des Zusammenspiels der durch die Rotation der Zentrifuge hervorgerufenen Zentrifugalkräfte mit den durch die Wirbelbildung auf die Turbulenzballen wirkenden Zentrifugalkräften aus der Grenzschicht herausdiffundiert und aus der mit der leichten Fraktion angereicherten Grenzschicht die leichte Fraktion des Gasgemisches abgeleitet wird.

2. Vorrichtung zur Durchführung des Verfahrens nach Anspruch 1, dadurch gekennzeichnet, dass die Zentrifuge mindestens eine mit hoher Geschwindigkeit umlaufende Scheibe (1) besitzt, welche einen in radialer Richtung verlaufenden Zuführungsbereich (2´, 8) für das gasförmige Gemisch aufweist, wobei in unmittelbarer Nähe des Aussenumfanges der Scheibe mindestens eine Ableitvorrichtung (4) für die leichte Fraktion des Gasgemisches vorgesehen ist.

3. Vorrichtung nach Anspruch 2, dadurch gekennzeichnet,

-2-

dass die Scheibe zwei im Abstand angeordnete Platten ( 5,6,) aufweist, zwischen denen sich der in radialer Richtung verlaufende Zuführbereich (8) ausbildet.

4. Vorrichtung nach Anspruch 2, dadurch gekennzeichnet, dass in der Scheibe in radialer Richtung verlaufende Kanäle (2´) vorgesehen sind, durch welche das Gemisch in den Randbereich der Scheibe (1) befördert wird.

5. Vorrichtung nach einem der Ansprüche 2 bis 4, dadurch gekennzeichnet, dass die Scheibe am Aussenrand radial verlaufende Erweiterungen (7) aufweist, in welche die Kanäle münden.

Fig. 1

Fig. 2

0008587

Fig.3

0008587

3/3

0008587

Europäisches
Patentamt

**EUROPÄISCHER RECHERCHENBERICHT**

Nummer der Anmeldung
EP 78 10 0715

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - B - 1 061 296 (DEGUSSA)  * Ansprüche 1,2; Abbildung 2 * | 1 | B 01 D 59/20 53/24 |
| AD | DE - B - 1 283 809 (INT. RESEARCH ESTABLISHMENT)  * Anspruch 1 *  & AT - A - 238 697 | 1 | |
| A | FR - A - 645 564 (IMPERIAL CHEMICAL)  * Zusammenfassungen 1,3 * | 1 | **RECHERCHIERTE SACHGEBIETE (Int. Cl.³)**  B 01 D 59/00 59/18 59/20 53/24 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-01-1979 | NICOLAS |

EPA form 1503.1  06.78